Europäisches Patentamt

European Patent Office

Office européen des brevets

(19)

(11) Numéro de publication: **0 243 237
B1**

(12)

# FASCICULE DE BREVET EUROPEEN

(45) Date de publication du fascicule du brevet:
23.08.89

(51) Int. Cl.⁴: **F16H 7/12**, F16F 9/10, F16F 1/37

(21) Numéro de dépôt: **87400830.3**

(22) Date de dépôt: **13.04.87**

(54) Dispositif de tendeur pour courroie de transmission.

(30) Priorité: 21.04.86 FR 8605697
16.03.87 FR 8703536

(43) Date de publication de la demande:
28.10.87 Bulletin 87/44

(45) Mention de la délivrance du brevet:
23.08.89 Bulletin 89/34

(84) Etats contractants désignés:
AT CH DE ES GB IT LI NL SE

(56) Documents cités:
WO-A-83/00731
DE-B- 1 035 413
FR-A- 2 396 648
GB-A- 1 541 736
US-A- 4 525 152

(73) Titulaire: HUTCHINSON, 2 rue Balzac, F-75008 Paris(FR)

(72) Inventeur: Zarife, Victor, La Loge Château de varenne,
F-45220 Saint Germain des prés(FR)
Inventeur: Zermati, Charles, 15, rue d'Aven,
F-78310 Maurepas(FR)
Inventeur: Argy, Gilles, 15ter, rue Nationale, F-78940 Le
Queue en Yvelines(FR)

(74) Mandataire: Orès, Bernard et al, Cabinet
ORES 6, Avenue de Messine, F-75008 Paris(FR)

ACTORUM AG

## Description

L'invention a pour objet un dispositif de tendeur pour courroie de transmission de puissance comme mentionné dans le préambule de la revendication 1 connu par le WO 83/00731.

On sait qu'un système de transmission de puissance par courroie d'un arbre à un autre, qu'il soit mis en oeuvre sur une automobile, un camion, une machine agricole ou un autre type de machine, exige la présence d'un tendeur de courroie pour l'obtention d'un fonctionnement satisfaisant. En effet, tout glissement de la courroie par rapport aux poulies avec lesquelles elle coopère influence défavorablement la transmission du mouvement, un tel glissement pouvant apparaître en raison d'un allongement naturel de la courroie au cours de son utilisation, ou résulter des différences des cotes nominales d'une courroie à une autre ou encore provenir d'une diminution de la tension de la courroie, par exemple au démarrage du moteur d'entraînement.

Il importe en outre, dans un système de transmission de puissance à courroie, que le fonctionnement soit aussi régulier que possible et, dans ce but, des dispositifs sont prévus pour amortir les vibrations engendrées dans la courroie par les irrégularités cycliques du régime moteur, en particulier au ralenti ou lors des à-coups qui apparaissent à la mise en route et/ou à l'arrêt des appareillages solidaires des arbres menés qu'entraîne la courroie.

Pour satisfaire aux conditions qui viennent d'être énoncées on a déjà proposé de munir un système de transmission à courroie d'un galet avec lequel coopère la courroie et dont l'axe est mobile suivant la direction longitudinale d'un ressort de rappel, de tels dispositifs étant parfois appelés tendeurs linéaires. L'amortissement des vibrations fait appel à un amortisseur distinct du ressort, du type hydraulique ou à frottement sec lequel, complémentairement, atténue le phénomène de mise en résonance du ressort du tendeur.

Dans un tel dispositif connu, par exemple par WO-83/00 731, le ressort est formé par un empilage de rondelles Belleville et l'amortisseur hydraulique est un système à piston distant desdites rondelles, avec un clapet en dérivation sur le cylindre logeant le piston. L'ensemble sollicite le galet à l'élongation.

Par rapport à cet état de la technique, le but de l'invention est de fournir un dispositif de tendeur travaillant à la traction et qui, sous un encombrement plus faible permet d'amortir les vibrations engendrées dans la courroie par les irrégularités cycliques du régime moteur ou les à-coups mentionnés ci-dessus.

Un autre but de l'invention est de fournir un tel dispositif qui, en raison de la simplification qu'il apporte par rapport aux systèmes connus, soit d'un coût plus faible que celui desdits systèmes et, ainsi, d'une exploitation industrielle plus économique.

Un autre but de l'invention est de fournir un tel dispositif de fabrication simple propre à jouer son rôle aussi bien en régime statique qu'en régime dynamique et qui soit applicable à des systèmes de courroie présentant de relativement grandes tolérances de fabrication et montage.

Un dispositif de tendeur selon l'invention est indiqué dans les caractéristiques de la revendiction 1.

Un ressort qui est enrobé d'élastomère formant une gaine et qui est associé avec des moyens du type hydraulique pour l'amortissement des vibrations est connu par le DE-B 1 035 413.

Selon une autre caractéristique de l'invention, l'élastomère qui peut être l'un quelconque des nombreux caoutchoucs connus est conformé de façon à limiter sa fatigue, avantageusement en prévoyant qu'il se déforme principalement en flexion.

Selon une autre caractéristique de l'invention, le dispositif à clapet qui définit dans la gaine d'élastomère au moins une chambre à volume variable remplie de liquide est organisé pour que l'entrée de liquide dans et/ou la sortie de liquide hors de ladite chambre se fasse suivant des caractéristiques dissymétriques, le dispositif présentant alors un effet d'amortissement plus grand dans un sens que dans l'autre qui permet d'augmenter la tension moyenne de la courroie à l'apparition du régime d'oscillations.

Pour permettre à la fois l'utilisation d'un moule de fabrication simple de conception et facile d'emploi, ainsi que l'obtention de caractéristiques de raideur du dispositif qui n'en limitent pas l'utilisation, l'invention prévoit que la gaine soit à surfaces interne et externe très sensiblement cylindriques et en un matériau élastomère alvéolaire.

Une telle réalisation permet de réduire la sollicitation de l'élastomère mis en oeuvre par rapport aux réalisations à gaine en caoutchouc compact. L'utilisation d'un élastomère alvéolaire, à module élastique réduit, accroît l'élasticité de l'élastomère avec une augmentation simultanée et sensible de sa compressibilité. Une même déformation en élongation du ressort revêtu de l'élastomère surmoulé s'accompagne cependant d'une moindre contrainte dans l'élastomère de sorte que la tenue en fatigue de ce dernier est ainsi améliorée et, par conséquent, la longévité du dispositif.

Dans un mode d'exécution préféré, l'élastomère alvéolaire est un matériau du type des polyéthylènes chlorosulfonés dans lequel des bulles de gaz ont été créées au cours de la vulcanisation.

Compte tenu des forces mises en jeu dans le tendeur, des déplacements desdites forces dont l'amplitude peut être de l'ordre de quelques millimètres et de la fréquence de travail, le dispositif s'échauffe en fonctionnement et l'invention prévoit des moyens de refroidissement, par exemple un capot ou une jupe externe nervurée propre à accroître la surface d'échange thermique avec l'air ambiant.

D'autres mesures peuvent également être prévues pour favoriser cet échange thermique, par exemple des capots externes ajourés.

L'invention sera bien comprise par la description qui suit, faite à titre d'exemple et en référence au dessin annexé dans lequel :

- la figure 1 est une vue schématique d'un système connu de transmission à courroie;

- la figure 2 est une vue schématique d'une première forme de réalisation d'un dispositif selon l'invention;

- la figure 3 est une vue analogue à celle de la figure 2 mais pour une autre forme de réalisation ;

- la figure 4 est une vue analogue aux figures 2 et 3 mais pour une variante ;

- la figure 5 est une vue en coupe longitudinale d'une autre forme de réalisation ;

- la figure 6 est une vue de détail.

- la figure 7 est analogue à la figure 5 mais pour une variante.

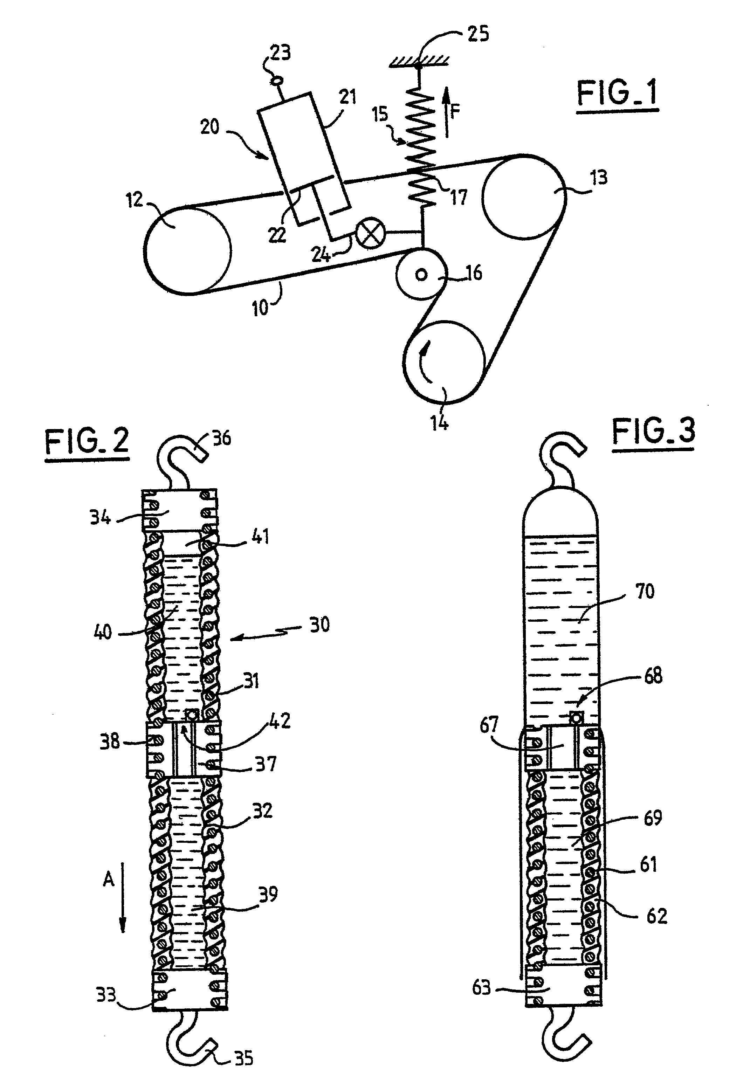

On se réfère d'abord à la figure 1 qui illustre, schématiquement, un dispositif connu de transmission à courroie. Dans un tel dispositif une courroie 10 coopère avec les flasques de poulies 12 et 13 solidaires en rotation d'arbres menés et avec les flasques d'une poulie 14 solidaire d'un arbre menant, par exemple le vilebrequin d'un moteur d'automobile, de camion, de machine agricole ou analogue. Pour assurer la tension de la courroie 10 un tendeur 15, à galet 16 et ressort 17 est associé au dispositif. Le galet 16 est monté mobile sensiblement suivant la direction de la flèche F, qui est celle de l'axe du ressort de rappel 17, pour rattraper l'allongement de la courroie 10 afin d'éviter le glissement de celle-ci par rapport aux flasques des poulies. Pour éviter que le ressort 17 n'entre en résonance d'une part et, d'autre part, amortir les vibrations engendrées dans la courroie 10 par les irrégularités cycliques du régime moteur, en particulier au ralenti ou lors des à-coups engendrés par la mise en route et/ou l'arrêt des appareillages entraînés par les arbres solidaires des poulies 12 et 13, un amortisseur 20 à cylindre 21 et piston 22 est accroché en un point fixe 23 et relié par un système de levier 24 au galet 16. Le point fixe 23 de l'amortisseur 20 est différent du point d'accrochage 25 du ressort 17 de sorte que la juxtaposition de deux organes distincts à moyens de levier et à points d'ancrage séparés complique le montage et accroît l'encombrement ainsi que le coût du système.

Pour pallier ces inconvénients, l'invention prévoit de fournir un seul ensemble unitaire de faible encombrement, qui assure la mise sous tension de la courroie et simultanément l'amortissement des vibrations.

Dans une première forme de réalisation, figure 2, le dispositif 30 comprend un ressort à boudin 31 sur lequel est surmoulé un matériau élastomère montré par des hachures simples sur le dessin, par exemple du caoutchouc, qui définit ainsi une gaine 32 sensiblement cylindrique, étanche, fermée à ses extrémités par des obturateurs 33 et 34 dont sont solidaires, respectivement, des crochets ou anneaux 35, 36 destinés l'un, -par exemple le crochet ou anneau 35-, à la liaison directe ou indirecte par exemple par l'intermédiaire d'un levier au galet 16 et l'autre, -le crochet ou anneau 36-, à la fixation au point d'ancrage 25. Le volume intérieur à la gaine 32 est divisé, par une bague de séparation 37 à filets externes 38 avec lesquels coopèrent les spires du ressort 31, en un deux chambres 39 et 40, respectivement, remplies l'une et l'autre d'un liquide et dont la seconde peut présenter, en partie haute, un volume d'air résiduel 41.

La bague 37 constitue l'un des éléments d'un dispositif à clapet, 42, prévu pour la commande de la circulation du liquide entre les chambres 39 et 40, cette circulation étant avantageusement dissymétrique, c'est-à-dire plus facile dans un sens que dans l'autre avec pour conséquence un effort d'amortissement plus important dans le sens de la flèche A, sur le dessin, qui est celui correspondant à l'allongement du ressort 31.

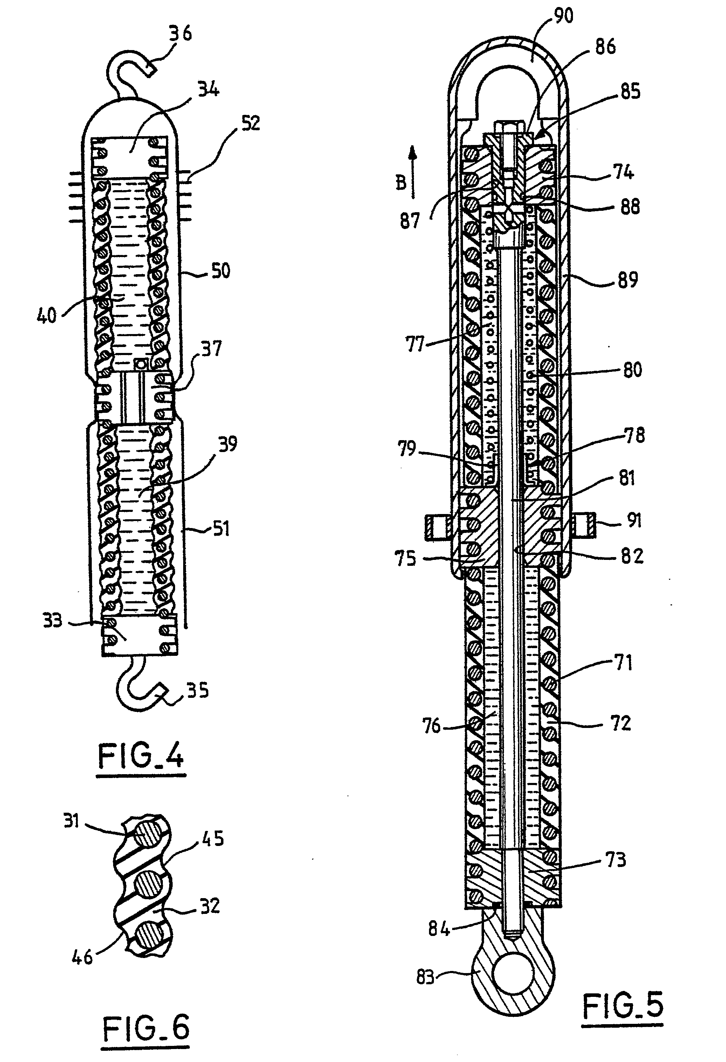

L'élastomère est conformé lors du surmoulage du ressort 31 pour que le taux de déformation dynamique soit limité à une valeur prédéterminée, afin de réduire sa fatigue, par exemple, comme montré sur la figure 6, avec une section droite longitudinale à ondulations externes 45 et ondulations internes 46 correspondant à des déformations principalement en flexion de l'élastomère.

Le matériau de la gaine 32 est en outre choisi, de même que le fluide emplissant les chambres 39 et 40, pour conserver ses caractéristiques dans la plage des températures d'utilisation du dispositif. A cet égard, l'invention prévoit complémentairement d'associer à ce dernier des moyens propres à accroître la surface d'échange thermique avec l'air ambiant et cela pour une meilleure dissipation de la chaleur engendrée au cours du fonctionnement.

Ainsi, dans la forme de réalisation montrée sur la figure 4, et qui est très proche de celle décrite en référence à la figure 2, un capot métallique 50 enferme une partie du dispositif, plus précisément celle s'étendant entre l'obturateur 34 et la bague 37, au droit de laquelle le dispositif est fixé, tandis qu'une jupe 51 entoure la gaine entre ladite bague 37 et le voisinage de l'autre obturateur 33, les échanges thermiques étant favorisés par des ailettes ou des nervures transversales ou longitudinales, comme montré schématiquement en 52, figure 4 et/ou en prévoyant des ajours dans le capot 50 ou la jupe 51 pour la circulation d'air au voisinage immédiat du dispositif.

Dans la réalisation montrée sur la figure 3, le ressort 61, analogue au ressort 31 de la réalisation précédente, est enrobé d'une gaine de matériau élastomère 62 lequel définit ainsi un manchon sensiblement cylindrique fermé à une extrémité par un obturateur 83 sur lequel s'accroche le ressort 61 et à son autre extrémité par une bague 67 sur laquelle s'accroche également l'autre extrémité du ressort 61. A la bague 67 est associé un dispositif de clapet 68 pour la commande de la circulation d'un liquide entre la chambre 69, que ménage la gaine 62, et une seconde chambre 70 elle aussi emplie de liquide mais démunie de ressort et de gaine en matériau élastomère.

Dans la réalisation selon la figure 5, le ressort 71, analogue aux ressorts 31 et 61 des réalisations précédentes, est enrobé dans une gaine de matériau élastomère 72, sensiblement cylindrique, fermée à ses extrémités par des obturateurs 73, 74 sur lesquels sont accrochées les extrémités du ressort 71. Le volume intérieur à la gaine 72 est divisé par une bague 75 en une chambre 76 et une chambre 77, emplies l'une et l'autre d'un liquide approprié, comme du glycol, lequel peut circuler d'une chambre à l'autre, et vice et versa, de façon dissymétrique au travers d'un dispositif de clapet 78 lequel est constitué par un organe du genre dash-pot à bague calibrée 79 sur laquelle s'exerce l'action d'un ressort 80 et qui est montée coulissante sur un axe 81 traversant la bague 75 par une alésage 82. A son extrémité inférieure l'axe 81 est fixé dans un anneau 83, accolé à l'obturateur 73 avec interposition d'un joint torique 84 tandis qu'à son extrémité supérieure la tête 85 dudit axe présente un épaulement 86 reposant sur la face supérieure de l'obturateur 74 auquel elle est fixée et qu'elle traverse par un alésage 87 avec interposition d'un joint d'étanchéité 88.

Dans cette forme de réalisation, un capot ajouré, en particulier au droit d'un arceau 90, qui garnit son fond, entoure le dispositif dans sa partie comprise entre la bague de séparation 75 et l'espace s'étendant au delà de l'obturateur 74, une bague de sertissage 91 entourant ledit capot sensiblement au droit de la bague de séparation 75.

Le fonctionnement d'un tel dispositif, fixé dans sa partie haute par l'arceau 90 et dont l'anneau 83 est solidaire directement ou indirectement, par exemple par un levier du galet 16, résulte immédiatement de ce qui précède: dès l'apparition d'une diminution de la tension de la courroie 10 le ressort 71 exerce une action dans le sens de la flèche B entraînant l'axe 81 avec passage simultané de liquide de la chambre 76 à la chambre 77 pour faire croître la tension de la courroie.

Si, par contre, la tension de cette dernière augmente, le tendeur réagit par un mouvement de sens inverse à celui montré par la flèche B de l'anneau 83 et de l'axe 81 qui en est solidaire lequel provoque le déplacement dans le sens opposé à celui montré par la flèche B de l'obturateur 74. Le liquide enfermé dans la chambre 77 gagne la chambre 76 avec un effet d'amortissement plus grand que dans le sens opposé décrit ci-dessus et les oscillations sont amorties, avec une augmentation de la tension moyenne de la courroie, lorsque apparaît ledit régime d'oscillations.

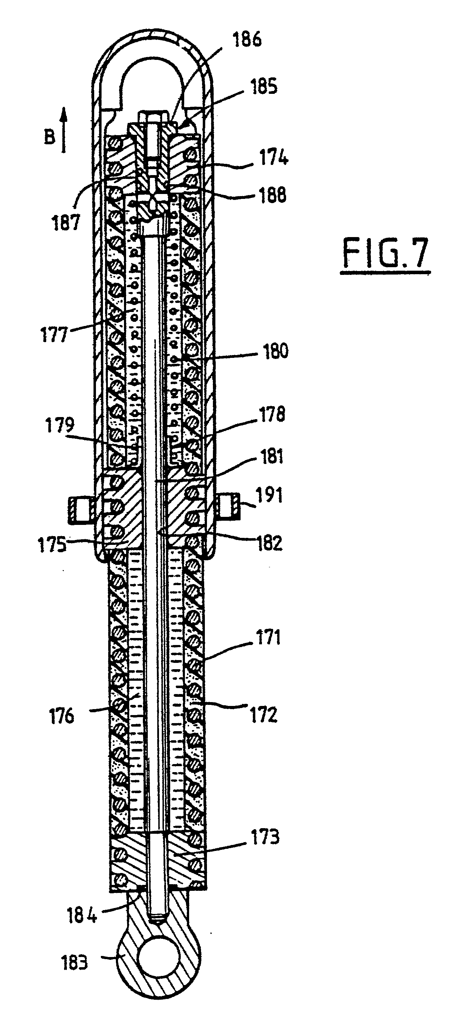

Dans la réalisation selon la figure 7, le dispositif comprend un ressort à boudin 171 sur lequel est surmoulé un matériau alvéolaire, par exemple un matériau du type des polyéthylènes chlorosulfonés. L'élastomère alvéolaire est surmoulé sur le ressort pour former une gaine 172, à surfaces interne et externe conformées suivant des cylindres à sections droites circulaires.

Le volume intérieur à la gaine 172 est divisé par une bague 175 en une chambre 176 et une chambre 177 emplies l'une et l'autre d'un liquide approprié, comme du glycol, lequel peut circuler d'une chambre à l'autre et vice-versa de façon dissymétrique au travers d'un dispositif de clapet 178 lequel est constitué par un organe du genre dash-pot à bague calibrée 179 sur laquelle s'exerce l'action d'un ressort 180 et qui est monté coulissant sur un axe 181 traversant la bague 175 par un alésage 182. A son extrémité inférieure, sur le dessin l'axe 181 est fixé dans un anneau 183 accolé à un obturateur 173, avec interposition d'un joint torique 184 tandis qu'à son extrémité supérieure, sur le dessin la tête 185 dudit axe présente un épaulement 186 reposant sur la face supérieure d'un obturateur 174 auquel elle est fixée et qu'elle traverse par un alésage 187 avec interposition d'un joint d'étanchéité 188. Le fonctionnement du dispositif de tendeur, monté à l'aide d'une bague de sertissage 191 prévue sensiblement au droit de la bague de séparation 175, est identique à celui de la réalisation selon la figure 5 : dès l'apparition d'une diminution de la tension de la courroie à laquelle est associé le tendeur, le ressort 171 exerce une action dans le sens de la flèche B entraînant l'axe 181 avec passage simultané de liquide de la chambre 176 à la chambre 177, pour faire croître la tension de la courroie. La partie de la gaine 172 comprise entre la bague 175 et l'anneau 183 est alors comprimée. Toutefois, en raison de la nature alvéolaire de l'élastomère placé autour et entre les spires du ressort 171, la compressibilité dudit élastomère est accrue et la raideur en compression du matériau alvéolaire étant diminuée par rapport à celle d'un caoutchouc compact, le dispositif selon l'invention est soumis à de plus faibles contraintes pour une même élongation du ressort, avec pour conséquence une meilleure tenue en fatigue du dispositif et une plus grande durée de vie de celui-ci.

Etant donné qu'une sollicitation en traction du ressort 171 entre l'obturateur 173 et le dispositif de clapet 178 correspond à une sollicitation en compression de la partie du ressort comprise entre ledit clapet et l'obturateur 174, la réalisation de la totalité de la gaine en élastomère alvéolaire permet de limiter la raideur du dispositif même dans la partie travaillant en compression, de sorte que l'allongement, -qui pour un effort donné est proportionnel à la raideur-, peut varier dans une plage suffisamment large pour permettre au tendeur de jouer son rôle aussi bien en régime statique qu'en régime dynamique.

En outre, la tension exercée par le tendeur étant plus constante sur une course plus grande, il en résulte une latitude accrue sur les tolérances de fabrication et de montage des courroies.

Complémentairement, la fabrication par surmoulage de la gaine suivant des surfaces externe et interne cylindriques, à sections droites circulaires est simplifiée par rapport à la fabrication antérieure à gaine ondulée sur ses parois interne et externe, aucune précaution particulière n'ayant à être prise pour le positionnement du ressort, -dont les spires peuvent présenter de légères différences d'écartement par rapport à un pas nominal-, dans un moule de forme.

Pour une telle fabrication, l'invention prévoit d'ajouter à la composition d'élastomère de moulage un agent gonflant qui, en engendrant des bulles de gaz au sein de l'élastomère au cours de la vulcanisation, conduit à un matériau vulcanisé alvéolaire dont la densité peut être réduite, par rapport à celle du même élastomère compact, dans des proportions allant jusqu'à 30%, une telle réduction de densité entraînant une diminution de la raideur en compression de l'élastomère alvéolaire qui est divisée par un facteur de l'ordre de 6 à 7 par rapport au même élastomère compact.

Des réductions de densité plus faibles que celle indiquée ci-dessus peuvent, bien entendu, être mises en oeuvre pour diviser la raideur par un facteur de l'ordre de 3 à 4 et de bons résultats ont été obtenus, par exemple, pour une réduction de densité de l'élastomère de 15%.

L'agent gonflant incorporé à la composition d'élastomère peut être tout agent connu, par exemple, un agent du type de l'azodicarbonamide qui conduit à des résultats satisfaisants pour de faibles ajouts, de l'ordre de 2 %.

La composition de l'élastomère alvéolaire est choisie pour que la gaine conserve son élasticité améliorée et sa plus grande compressibilité, -dues à la présence de bulles gazeuses-, dans la plage des températures d'utilisation du dispositif, lequel comprend, complémentairement, les moyens propres à accroître sa surface d'échange thermique avec l'air ambiant pour une meilleure dissipation de la chaleur engendrée au cours du fonctionnement.

## Revendications

1. Dispositif de tendeur pour courroie de transmission de puissance comprenant un ressort associé à l'axe d'un galet tendeur avec lequel coopère la courroie pour commander le déplacement dudit galet sous l'action dudit ressort et des moyens du type hydraulique comprenant au moins une chambre à volume variable et, emplie d'un liquide avec laquelle coopère un dispositif à clapet pour l'amortissement des vibrations susceptibles de prendre naissance dans la courroie, caractérisé en ce que le ressort est un ressort de rappel (31, 61, 71, 171) qui est enrobé d'élastomère formant une gaine (32, 62, 72, 172) fermée à l'une de ses extrémités par un obturateur plein (33, 63, 73, 173) et en ce que ladite chambre (39, 69, 76, 176) à volume variable est limitée par ladite gaine et est fermée à l'une de ses extrémités par ledit dispositif à clapet (42, 68, 78, 178) dont la traversée par le liquide pour entrer dans et/ou sortir de ladite chambre introduit ledit effet d'amortissement.

2. Dispositif selon la revendication 1, caractérisé en ce que l'élastomère est un caoutchouc conformé de façon à limiter sa fatigue, avantageusement en prévoyant qu'il se déforme principalement en flexion (figure 6).

3. Dispositif selon la revendication 1, caractérisé en ce que le dispositif à clapet (42, 68, 78, 178) est organisé pour que l'entrée de liquide dans et/ou la sortie de liquide hors de ladite chambre (39, 69, 76) se fasse suivant des caractéristiques dissymétriques, le dispositif présentant alors un effet d'amortissement plus grand dans un sens que dans l'autre pour augmenter la tension moyenne de la courroie à l'apparition du régime d'oscillations comme connu en soi.

4. Dispositif selon la revendication 1, caractérisé en ce que la gaine (172) est à surfaces interne et externe très sensiblement cylindriques et est en un matériau élastomère alvéolaire.

5. Dispositif selon la revendication 4, caractérisé en ce que la gaine (172) est en un matériau alvéolaire à base de polyéthylène chlorosulfoné auquel a été ajouté un agent gonflant provoquant la formation d'alvéoles au moment de la vulcanisation.

6. Dispositif selon la revendication 5, caractérisé en ce que le matériau alvéolaire est un élastomère dont la densité est de 15 à 30% inférieure à celle du même élastomère compact.

7. Dispositif selon l'une quelconque des revendications précédentes, caractérisé en ce qu'il comprend en outre des moyens de refroidissement comme un capot (50) ou une jupe externe (51) nervurée et/ou munie d'ailettes transversales ou longitudinales (52) pour accroître la surface d'échange thermique avec l'air ambiant.

8. Dispositif selon la revendication 7, caractérisé en ce que la jupe (51) ou le capot (50) est ajouré.

9. Dispositif selon l'une quelconque des revendications précédentes dans lequel le dispositif à clapet (78, 178) ménage deux chambres (76, 77, 176, 177) à volume variable l'une et l'autre, caractérisé en ce que ledit dispositif à clapet comprend une bague calibrée (79, 179) sur laquelle s'exerce l'action d'un ressort d'appui (80, 180) et qui est montée coulissante sur un axe (81, 181), celui-ci étant solidaire d'un premier obturateur plein (73, 173) qui ferme la première chambre (76, 176), le mouvement dudit premier obturateur (73, 173) étant commandé par celui du galet tendeur avec lequel coopère la courroie et ledit axe étant, à son autre extrémité, solidaire d'un second obtuateur (74, 174) qui ferme la seconde chambre (77, 177) (figures 5 et 7).

10. Dispositif selon la revendication 9, caractérisé en ce qu'il comprend une bague (75, 175) divisant la gaine (72,172) en les deux chambres (76, 77, 176, 177) emplies de liquide.

## Patentansprüche

1. Spannvorrichtung für einen Treibriemen für die Leistungsübertragung, umfassend eine Feder, die mit der Achse einer Spannrolle, mit welcher der Treibriemen zusammenwirkt, zum Steuern der Verlagerung dieser Rolle unter der Wirkung dieser Feder verbunden ist, und Mittel von hydraulischer Art, umfassend wenigstens eine Kammer mit variablem Volumen und gefüllt mit einer Flüssigkeit, mit welcher eine Ventilvorrichtung für die Dämpfung von Vibrationen, die geeignet sind, in dem Treibriemen zu entstehen, zusammenwirkt, dadurch gekennzeichnet, daß die Feder eine Rückstellfeder (31, 61, 71, 171) ist, die von Elastomer ummantelt ist, das eine Umhüllung (32, 62, 72, 172) bildet, die an dem einen ihrer Enden von einem vollwandigen Verschluß (33, 63, 73, 173) verschlossen ist, und daß die Kammer (39, 69, 76, 176) mit variablem Volumen durch die Umhüllung begrenzt und an dem einen ihrer Enden durch die Ventilvorrichtung (42, 68, 78, 178) geschlossen ist, deren Durchsetzung durch die Flüssigkeit zum Eintreten in und/oder Austreten aus der Kammer den Dämpfungseffekt einführt.

2. Vorrichtung nach Anspruch 1, dadurch gekennzeichnet, daß das Elastomer ein Kautschuk ist, der in der Weise gestaltet ist, daß seine Ermüdung beschränkt wird, vorteilhafterweise, indem man vorsieht, daß er sich hauptsächlich in Durchfederung deformiert (Fig. 6).

3. Vorrichtung nach Anspruch 1, dadurch gekennzeichnet, daß die Ventilvorrichtung (42, 68, 78, 178) so eingerichtet ist, daß der Eintritt der Flüssigkeit in und/oder der Austritt der Flüssigkeit aus der Kammer (39, 69, 76) gemäß unsymmetrischen Charakteristika geschieht, wobei die Vorrichtung dann einen größeren Dämpfungseffekt in einer Richtung als in der anderen aufweist, um die mittlere Spannung des Treibriemens beim Auftreten des Schwingungsbereichs, wie an sich bekannt, zu erhöhen.

4. Vorrichtung nach Anspruch 1, dadurch gekennzeichnet, daß die Umhüllung (172) eine solche mit inneren und äußeren Oberflächen ist, die sehr deutlich zylindrisch sind, und daß sie aus einem zelligen elastomeren Material ist.

5. Vorrichtung nach Anspruch 4, dadurch gekennzeichnet, daß die Umhüllung (172) aus einem zelligen Material auf der Basis von chlorsulfoniertem Polyethylen ist, dem ein Treibmittel beigegeben worden ist, welches die Bildung von Zellen im Augenblick der Vulkanisation hervorruft.

6. Vorrichtung nach Anspruch 5, dadurch gekennzeichnet, daß das zellige Material ein Elastomer ist, dessen Dichte von 15 bis 30% unter derjenigen des gleichen kompakten Elastomers ist.

7. Vorrichtung nach irgendeinem der vorhergehenden Ansprüche, dadurch gekennzeichnet, daß sie außerdem Mittel zum Kühlen umfaßt, wie eine Haube (50) oder eine externe Schürze (51), die gerippt und/oder mit querverlaufenden oder längsverlaufenden Flügeln (52) versehen ist, um die Wärmeaustauschoberfläche mit der Umgebungsluft zu vergrößern.

8. Vorrichtung nach Anspruch 7, dadurch gekennzeichnet, daß die Schürze (51) oder die Haube (50) durchbrochen ist.

9. Vorrichtung nach irgendeinem der vorhergehenden Ansprüche, in welcher die Ventilvorrichtung (78, 178) zwei Kammern (76, 77, 176, 177), beide mit variablem Volumen, vermittelt, dadurch gekennzeichnet, daß die Ventilvorrichtung einen kalibrierten Ring (79, 179) umfaßt, auf den die Wirkung einer Abstützungsfeder (80, 180) wirkt und die verschiebbar auf einer Achse (81, 181) angebracht ist, welche fest mit einem ersten vollwandigen Verschluß (73, 173) verbunden ist, der die erste Kammer (76, 176) verschließt, wobei die Bewegung dieses ersten Verschlusses (73, 173) durch diejenige der Spannrolle gesteuert wird, mit welcher der Treibriemen zusammenwirkt, und welche Achse an ihrem anderen Ende fest mit einem zweiten Verschluß (74, 174) verbunden ist, der die zweite Kammer (77, 177) verschließt (Fig. 5 und 7).

10. Vorrichtung nach Anspruch 9, dadurch gekennzeichnet, daß er einen Ring (75, 175) umfaßt, welcher die Umhüllung (72, 172) in den beiden mit Flüssigkeit gefüllten Kammern (76, 77, 176, 177) unterteilt.

## Claims

1. A tensioning device for a power transmission belt comprising a spring associated with the pin of a tensioning roller with which the belt cooperates to control the displacement of said roller under the action of said spring and means of the hydraulic type comprising at least one variable capacity chamber and filled with a liquid, with which chamber there cooperates a valve device for damping the vibrations liable to arise in the belt, characterised in that the spring is a return spring (31, 61, 71, 171) which is covered with elastomer forming a sheath (32, 62, 72, 172) closed at one of its ends by a solid obturator (33, 63, 73, 173), and in that said variable capacity chamber (39, 69, 76, 176) is bounded by said sheath and is closed at one of its ends by said valve device (42, 68, 78, 178), the passage through which by the liquid, to enter and/or leave said chamber, introduces said damping effect.

2. A device according to Claim 1, characterised in that the elastomer is a rubber formed in such a manner as to limit its fatigues, preferably by providing that it is deformed principally in flexion. (Figure 6).

3. A device according to Claim 1, characterised in that the valve device (42, 68, 78, 178) is adapted so that the entrance of the liquid into and/or the flowing of the liquid out of said chamber (39, 69, 76) takes place in accordance with asymmetrical characteristics, the device then having a greater damping effect in one direction than in the other to increase the mean tension of the belt on the appearance of the oscillation conditions, as known per se.

4. A device according to Claim 1, characterised in that the sheath (172) has internal and external surfaces which are very substantially cylindrical and is made of a cellular elastomeric material.

5. A device according to Claim 4, characterised in that the sheath (172) is made of a cellular material on a chlorosulphonated polyethylene base to which there has been added a blowing agent causing the formation of cells at the moment of vulcanization.

6. A device according to Claim 5, characterised in that the cellular material is an elastomer, the density of which is 15 to 30% less than that of the same compact elastomer.

7. A device according to any one of the preceding claims, characterised in that it further comprises cooling means such as a cap (50) or an external skirt (51), which is ribbed and/or equipped with transverse or longitudinal fins (52) to increase the area of heat exchange with the ambient air.

8. A device according to Claim 7, characterised in that the skirt (51) or the cap (50) is perforated.

9. A device according to any one of the preceding claims wherein the valve device (78, 178) forms two chambers (76, 77, 176, 177) each of which has a variable capacity, characterised in that said valve device comprises a calibrated ring (79, 179) on which there is exerted the action of a bearing spring (80, 180) and which is mounted for sliding on a pin (81, 181), the latter being rigidly connected to a first solid obturator (73, 173) which closes the first chamber (76, 176), the movement of said first obturator (73, 173) being controlled by that of the tensioning roller with which the belt cocperates and said pin being rigidly connected, at its other end, to a second obturator (74, 174) which closes the second chamber (77, 177) (Figures 5 and 7).

10. A device according to Claim 9, characterised in that it comprises a ring (75, 175) dividing the sheath (72, 172) into two chambers (76, 77, 176, 177) filled with liquid.

# FIG.1

# FIG.2

# FIG.3

FIG.4

FIG.6

FIG.5

## FIG.7